# FASCICULE DE BREVET EUROPEEN

(11) **EP 0 511 909 B1**
(45) Date de publication et mention de la délivrance du brevet: **13.09.1995**
(21) Numéro de dépôt: 92401202.4
(22) Date de dépôt: 27.04.1992
(51) Int. Cl.: H02G 1/02

(54) **Nacelle héliportée et son procédé d'utilisation pour le remplacement d'une portion d'un câble aérien**
Hubschrauber getragener Arbeitskorb und dessen Anwendungsmethode für den Austausch eines Teils eines Freileitungskabels
Helicopter-carried workbasket and method of use thereof for the replacement of a part of an overhead cable

(30) Priorité: 29.04.1991 FR 9105256
(43) Date de publication de la demande: 04.11.1992
(73) Titulaire: ELECTRICITE DE FRANCE Service National, 75008 Paris (FR)
(72) Inventeur: De Forges de Parny, Robert, F-13950 Cadolive (FR); Moudin, Gérard, F-73200 Pallud (FR); Ruaux, Philippe, F-13340 Rognac (FR)
(74) Mandataire: Poulin, Gérard

(56) Documents cités:
- US-A- 3 702 124
- US-A- 4 478 312

## Description

### DOMAINE DE L'INVENTION

L'invention concerne les travaux sur des câbles aériens, tels que les câbles utilisés pour le transport et la distribution de l'énergie électrique sous haute et moyenne tension. L'invention peut également s'appliquer à des câbles de moyens de transport, tels que les téléphériques et autres cabines portées par des câbles.

### ART ANTERIEUR

Tous ces câbles aériens nécessitent, une fois installés, de nombreuses opérations d'entretien et de réparation. En effet, dans le cadre des programmes d'entretien permanents du réseau de distribution électrique, l'Electricité de France doit assurer de nombreuses interventions diverses. Par exemple, la réparation ou le changement d'une partie d'un câble métallique conducteur et destiné au transport de l'énergie électrique sous haute tension nécessite la pose au sol de ce câble. Cette dernière opération ne peut se faire qu'à partir de pylônes voisins du tronçon à changer et sur lequel grimpent un ou plusieurs monteurs. Le temps d'intervention est extrêmement long et l'opération est évidemment périlleuse.

Dans le but d'améliorer le service rendu par le réseau de distribution d'électricité, il a été nécessaire de développer de nouvelles techniques d'intervention pour améliorer l'efficacité et accélérer les interventions d'entretien et de réparation des lignes à moyenne et haute tension du réseau de distribution public d'électricité.

D'autre part, par le brevet américain US-A-4 478 312, on connaît une nacelle héliportée pour l'entretien des lignes à haute tension. Cette nacelle comprend deux parties dans chacune desquelles un opérateur peut être embarqué. Elle comprend des moyens d'ancrage à une pièce de sustensation et des moyens de guidage sur des câbles, en l'occurrence des patins de guidage.

Cette nacelle est bien entendu héliportée et fixée sur des câbles haute tension pour l'entretien de ceux-ci. Par contre, elle est suspendue par l'intermédiaire d'un filin et d'un crochet de hissage.

### RESUME DE L'INVENTION

Le premier objet principal de l'invention est en conséquence une nacelle héliportée déplaçable le long d'un câble aérien, guidée par ce câble aérien, et destinée au remplacement d'un ancien tronçon de ce câble par un nouveau tronçon. La nacelle est constituée principalement d'une structure métallique qui délimite un volume de travail et sur laquelle sont embarqués :
- des moyens d'ancrage de la nacelle à un filin de sustentation à un hélicoptère ;
- un touret autour duquel peut être enroulé le nouveau tronçon pour être déroulé et autour duquel peut être ensuite enroulé l'ancien tronçon à remplacer ; et
- des moyens de guidage de la nacelle par le câble.

On comprend ainsi qu'une intervention héliportée est beaucoup plus rapide et efficace, malgré le coût horaire élevé de l'utilisation d'un hélicoptère. On précise que le guidage de la nacelle se fait au moyen de deux couples de deux poulies comprenant chacun :
- une poulie supérieure dont la gorge est légèrement ouverte pour faciliter le dégagement du câble lorsque ce câble remonte contre celle-ci; et
- une poulie inférieure destinée à recevoir le câble, lorsque la nacelle est opérationnelle, c'est-à-dire lorsqu'elle est tractée vers le haut par l'hélicoptère.

Pour compléter avantageusement ce système de guidage, on utilise pour chaque couple de poulie un flasque amovible pour enfermer le câble entre les deux poulies inférieure et supérieure, montées sur le même support, la fermeture de ce flasque étant assurée par une goupille verrouillable dans le support.

Pour favoriser l'introduction du câble dans l'espace entre les deux poulies inférieure et supérieure, lors de la mise en place de la nacelle, on utilise des barres de guidage inclinées et placées en regard de chaque couple de poulies.

De préférence, le touret est actionné en rotation à l'aide de moyens moteurs et de moyens de freinage.

Les moyens moteurs peuvent être sont constitués par un moteur hydraulique actionné par un moteur à explosion. Les moyens de freinage peuvent être constitués par un frein manuel à ruban.

Pour permettre l'immobilisation de la nacelle le long du câble, on prévoit une paire de mâchoires placée sur la trajectoire théorique du câble.

De manière à éviter que le câble ne pénètre dans le volume de la nacelle délimité par la structure métallique, des arceaux latéraux de guidage du câble sont placés autour de la nacelle. Ceci permet d'assurer la sécurité des opérateurs placés sur la nacelle vis-à-vis du danger que constitue le câble électrique par rapport auquel la nacelle peut se déplacer.

Pour favoriser le déroulement du nouveau tronçon à installer, une cage de guidage est prévue vers la partie supérieure du touret.

De même pour permettre l'enroulement autour du touret du tronçon à remplacer, une autre cage de guidage est placée à côté de la partie supérieure du touret, de manière à définir une trajectoire tangentielle et rectiligne par rapport au touret.

Dans la réalisation préférentielle de la nacelle, on prévoit une poutre supérieure à laquelle est suspendue la structure de la nacelle. Celle-ci comprend :
- des moyens pyrotechniques de largage placés sous la poutre pour larguer la structure de la nacelle, en cas de nécessité absolue ; et
- des crochets pour l'arrimage individuel du personnel de la nacelle et sa sustentation temporaire à la poutre supérieure en cas de largage de la structure métallique en cas d'accident.

Dans ce cas, la barre supérieure est reliée à la structure métallique par des joints de cardan.

La structure de la nacelle est prévue de préférence avec un plancher, des passerelles latérales escamotables étant également prévues pour prolonger le plancher.

La nacelle est particulièrement opérationnelle lorsqu'elle comprend des moyens de commande de la rotation du touret.

Un autre objet principal de l'invention est un procédé de remplacement d'un ancien tronçon d'un câble aérien par un nouveau tronçon. Il consiste à :
- placer contre le câble aérien une nacelle héliportée, telle qu'elle vient d'être décrite, et comprenant l'outillage nécessaire à l'opération ;
- arrimer la nacelle au câble ;
- fixer la première extrémité libre du nouveau tronçon enroulé au touret au câble en amont de la première extrémité du tronçon ancien à remplacer ;
- déplacer la nacelle le long du câble et dérouler le nouveau tronçon ;
- fixer un vérin de reprise d'effort à la deuxième extrémité du nouveau tronçon et au câble en aval de la deuxième extrémité de l'ancien tronçon ;
- tendre le nouveau tronçon au moyen du vérin de reprise et ainsi détendre l'ancien tronçon ;
- détacher du câble la deuxième extrémité de l'ancien tronçon du câble et l'introduire dans le touret ;
- déplacer la nacelle en sens inverse le long du câble pour enrouler l'ancien tronçon ; et
- détacher la première extrémité du tronçon ancien du câble.

### LISTE DES FIGURES

La description détaillée de l'invention est accompagnée de plusieurs figures qui représentent respectivement :
- figures 1A, 1B, 1C et 1D, des schémas relatifs aux différentes phases du procédé selon l'invention ;
- figure 2, la nacelle selon l'invention ;
- figure 3, l'utilisation du vérin de reprise de force dans le procédé selon l'invention ;
- figure 4, en vue frontale, un couple de poulies utilisées dans la nacelle selon l'invention.
- figure 5, le processus de largage de la structure métallique selon l'invention.

### DESCRIPTION DETAILLEE D'UNE REALISATION DE L'INVENTION

### Procédé de remplacement d'un tronçon ancien.

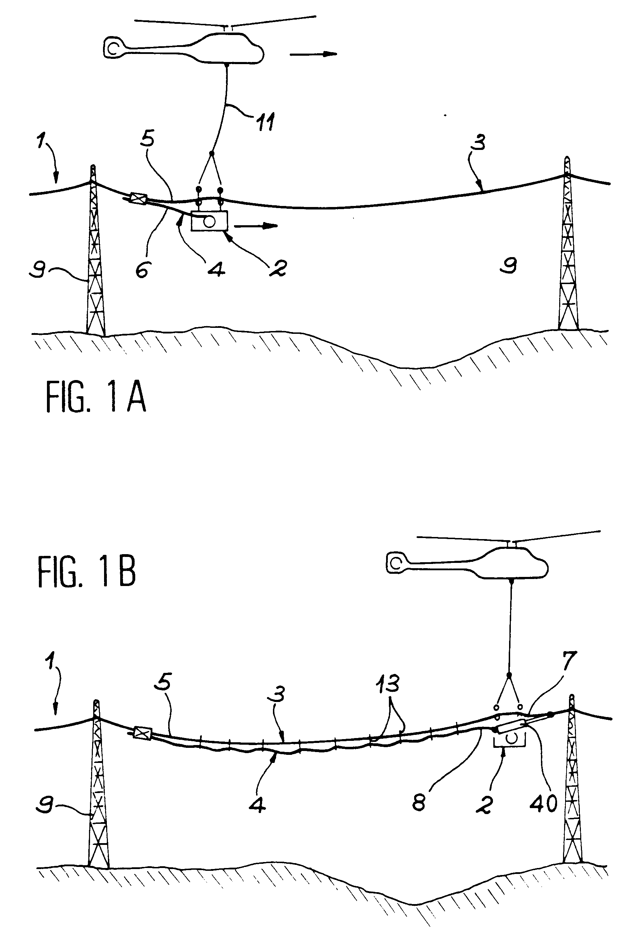

La figure 1A représente un câble aérien 1, suspendu par des pylônes 9, comme le sont les traits nombreux câbles du réseau public de distribution de l'énergie électrique. La référence 3 sur le câble représente un tronçon ancien et usagé de ce câble qui est à changer, dû à une quelconque détérioration ou à un accident. Comme on le comprend rapidement à la vue de ces figures, le procédé selon l'invention utilise un hélicoptère auquel est suspendue une nacelle 2, au moyen d'un filin de sustentation 11. On comprend également la possibilité qu'il y a de dérouler ainsi un câble ou une portion de câble entre deux pylônes 9. Ici, il s'agit de remplacer le tronçon ancien 3 par un nouveau tronçon 4 de même longueur.

La première opération consiste à suspendre une nacelle 2 à l'hélicoptère pour venir placer cette nacelle 2 contre le câble 1, et plus précisément contre la première extrémité 5 du tronçon usagé ou ancien 3. Cette nacelle 2 comprend bien évidemment le nouveau tronçon 4, de préférence sous la forme d'un enroulement autour d'un touret, de manière à pouvoir dévider le nouveau tronçon 4. Cette nacelle 2 comporte d'autres outillages de fixation et de démontage nécessaires à l'opération qui peut évidemment être menée à bien par un ou plusieurs opérateurs embarqués à bord de la nacelle 2.

La deuxième opération consiste à fixer sur le câble 1 l'extrémité libre 6 du nouveau tronçon 4 en amont de l'extrémité 5 de l'ancien tronçon.

Pendant toutes ces opérations, la nacelle 2 est maintenue à hauteur du câble 1 grâce à l'hélicoptère effectuant un vol stationnaire. Pour l'opération suivante, cet hélicoptère se déplace lentement le long du câble 1, de manière à déplacer la nacelle 2 le long de l'ancien tronçon 3 et de manière à dévider le nouveau tronçon 4 le long de l'ancien tronçon 3. Le guidage de la cellule 2 est symbolisé sur ces figures par quatre poulies qui seront détaillées ultérieurement dans la description.

La figure 1B représente la fin de la première course de l'hélicoptère qui est arrivé à la deuxième extrémité 7 de l'ancien tronçon 3, le nouveau tronçon 4 étant presque entièrement déroulé du touret de la nacelle 2.

L'étape suivante consiste donc à fixer à la deuxième extrémité 8 du nouveau tronçon 4 un vérin 40 de reprise de force dont l'autre extrémité est fixée au câble 1, en aval de la deuxième extrémité 7 du tronçon à remplacer. On note que, sur cette figure 1B, l'ancien tronçon 3 est tendu, alors que le nouveau tronçon 4 qui vient d'être déroulé est détendu. Pour faciliter le maintien du nouveau tronçon 4, par rapport à l'ancien tronçon 3, on utilise de préférence des anneaux 13 qui encerclent ces deux tronçons ancien 3 et nouveau 4.

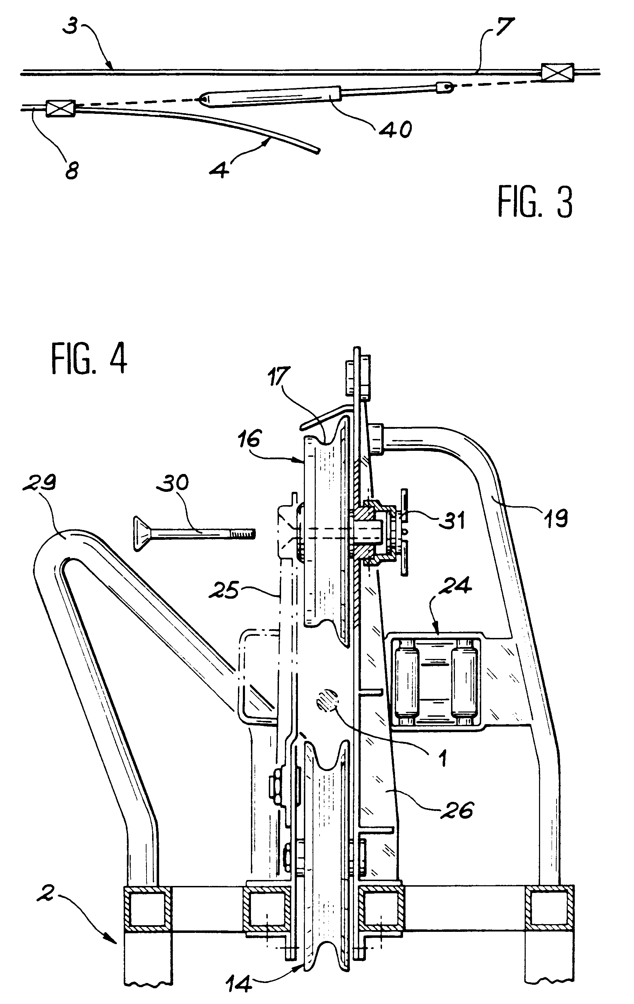

La figure 3 montre qu'une partie de la deuxième extrémité 8 du nouveau tronçon 4 doit être ménagée en aval du vérin 40 pour pouvoir être fixée directement au câble 1.

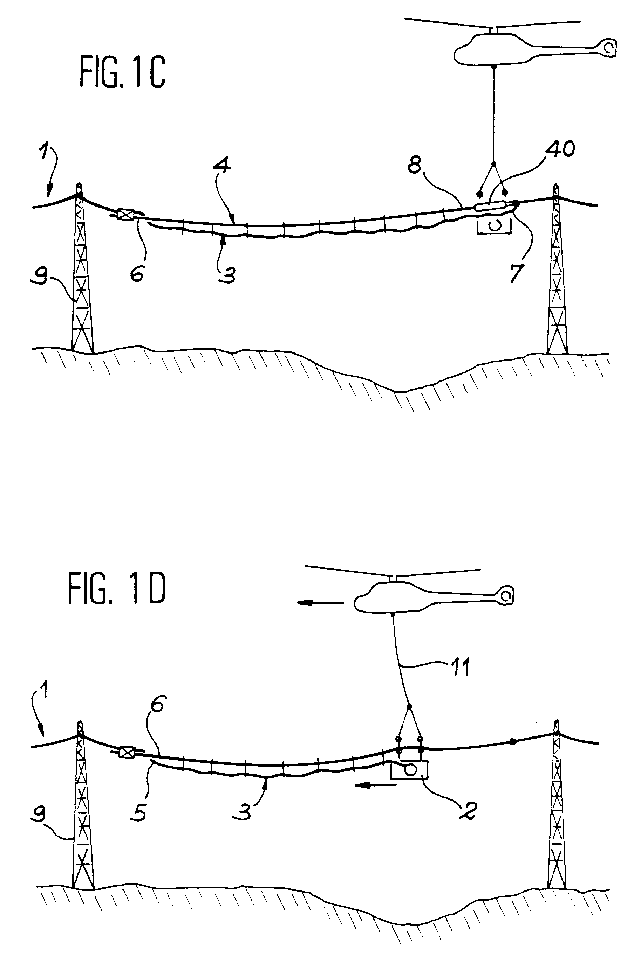

En comparaison avec la figure 1C, le nouveau tronçon 4 est représenté tendu, alors que l'ancien tronçon 3 est représenté détendu. En effet, au moyen du vérin de reprise d'effort 40, la deuxième extrémité 8 du nouveau tronçon 4 a été rapprochée du câble 1 en aval de la deuxième extrémité 7 de l'ancien tronçon 3, tendant ainsi le nouveau tronçon 4. L'ancien tronçon 3 étant détendu, il est possible de détacher son extrémité 7 du câble 1, en amont de la fixation du vérin de reprise d'effort 40 sur le câble 1. La deuxième extrémité 8 du nouveau tronçon 4 est fixée au câble 1.

La phase suivante consiste à enrouler l'ancien tronçon par un déplacement en sens inverse de l'hélicoptère auquel est suspendue la nacelle 2. Les anneaux 13 sont enlevés au fur et à mesure comme le montre la figure 1D.

La dernière opération consiste, une fois que l'ancien tronçon 3 est rembobiné, à détacher sa première extrémité 5 du câble 1, en aval de la fixation de la première extrémité 6 du nouveau câble 4.

Une telle opération peut être effectuée en quelques dizaines de minutes, ne monopolisant ainsi un hélicoptère que pendant un temps maximal d'une heure. On peut alors considérer l'économie ainsi réalisée par rapport à la dépose d'un câble sur le sol à son remplacement et à la remise en tension du nouveau câble qui prend plusieurs journées.

### Nacelle héliportée déplaçable.

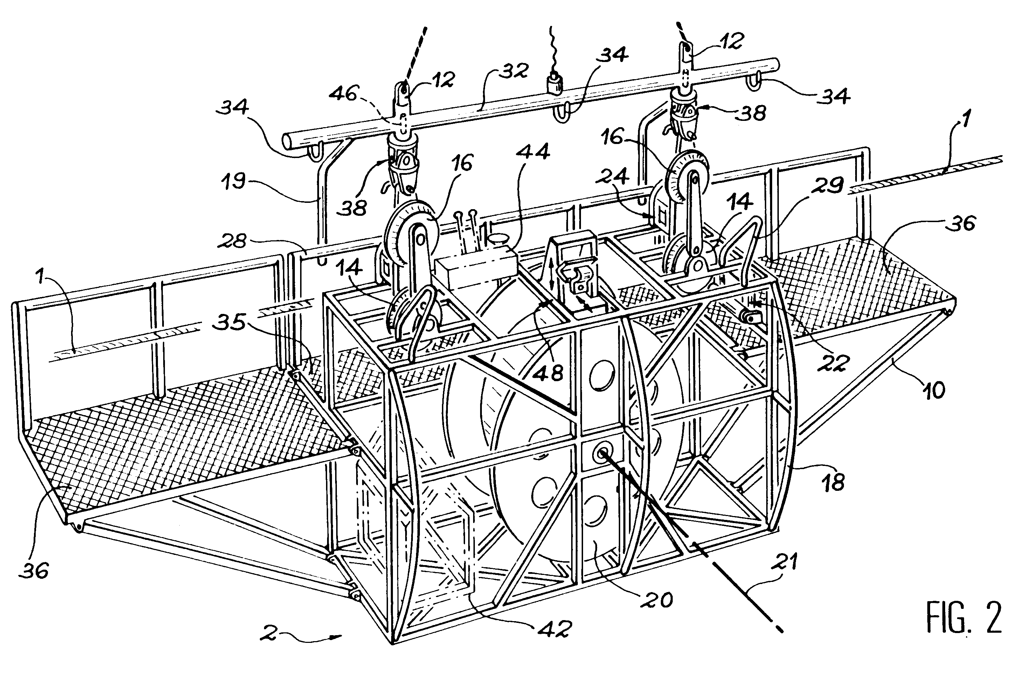

La figure 2 est un schéma général représentant une telle nacelle héliportée 2, utilisée dans le procédé qui vient d'être décrit. Cette réalisation n'est qu'un exemple puisqu'elle constitue un prototype, d'autres modèles pouvant être par la suite réalisés avec des modifications et des arrangements divers.

On constate aussitôt qu'elle est principalement composée d'une structure métallique 10, constituée de poutres, de cornières et, de manière préférentielle, d'un plancher 35 qui peut lui-même être composé de tôles ou d'un treillis métallique.

Un autre élément principal de la nacelle est constitué par des moyens d'ancrage, repérés 12, au filin de l'hélicoptère. Ces moyens d'ancrage peuvent être constitués par plusieurs crochets ou anneaux.

Un troisième élément principal est constitué par un touret 20 autour duquel est entouré au préalable le nouveau tronçon 4 qui doit être mis en place à la place de l'ancien 3. Ce touret 20 est monté tournant autour d'un axe horizontal de rotation 21.

Un dernier élément essentiel de la nacelle est constitué par des moyens de guidage de celle-ci par le câble lui-même 1. Ces moyens de guidage sont représentés sur cette figure par deux couples de poulies 14 et 16 entre lesquelles le câble est placé. On note que ces jeux de poulies sont placés de préférence à la verticale des points d'ancrage 12. En effet, l'hélicoptère exerce pendant la durée des opérations une légère traction verticale de manière à ce que le câble 1 soit en appui sur la poulie inférieure 14. Il convient donc que cette dernière soit à peu près dans le même plan vertical que ces points d'ancrage 12.

La figure 4 représente en détail un exemple de réalisation de ces jeux de poulies. La poulie inférieure 14 et la poulie supérieure 16 sont montées l'une au dessus de l'autre, libres en rotation autour de deux axes horizontaux. Elles sont montées par rapport à un support fixe 26 solidaire de la structure 10 de la nacelle.

Sur la figure 4, la gorge de la poulie inférieure 14 a une forme symétrique qui épouse le diamètre du câble 1. La forme de la gorge 17 de la poulie supérieure 16 a une forme dissymétrique. Plus exactement, le côté gauche ou le moyeu gauche, représenté sur cette figure, a été escamoté. En effet, lorsque la nacelle est opérationnelle, le câble 1 se trouve en appui contre la poulie inférieure 14, dans la gorge de celle-ci. Lorsqu'il s'agit de dégager la nacelle du câble 1, l'hélicoptère descend légèrement et le câble 1 quitte la gorge de la poulie inférieure pour venir en appui contre la gorge 17 de la poulie supérieure 16. Il est alors nécessaire de pouvoir dégager le câble 1. Dans ce but, la gorge 17 n'a pas une forme aussi précise vis-à-vis du câble 1 que celle de la poulie inférieure 14. Une simple pression latérale sur le câble 1 permet de dégager celui-ci en dehors de la gorge 17 de la poulie supérieure 16.

En association avec chaque couple de poulies, il a été prévu des barres de guidage 29 pour permettre aux câbles 1 de pénétrer dans l'espace compris entre les deux roues inférieure 14 et supérieure 16. Comme le montre la figure 4, la partie active de ces barres de guidage 29 comporte une portion inclinée, en l'occurrence à 45° sur la figure 4, pour canaliser le câble 1 vers les deux poulies 14 et 16. En effet, lors de la manoeuvre d'approche de la nacelle, celle-ci est approchée de plus en plus du câble. Compte tenu de la longueur du filin de sustentation à l'hélicoptère, environ trente mètres, la précision de la manoeuvre est relativement aléatoire. En conséquence, les mouvements de la nacelle par rapport aux câbles subsistent. Il est donc nécessaire de canaliser ce câble en direction de l'espace entre les deux poulies 14 et 16.

Lors de la manoeuvre d'approche, lorsque le câble se trouve au-dessus de la partie inclinée de la barre de guidage 29°, l'hélicoptère tracte la nacelle 2 vers le haut et le câble 1 se trouve dévié dans l'espace entre les deux poulies 14 et 16. Une fois positionné, le câble est de préférence enfermé dans cet espace, au moyen d'un flasque 25 positionné en regard de chaque couple de poulies 14 et 16.

Sur la figure 4, le flasque 25 a été représenté en traits mixtes dans sa position de fermeture. Il est alors vertical et passe par les deux axes horizontaux des deux poulies 14 et 16. La fermeture de l'espace compris entre ce flasque 25, le support 26 et les deux roues inférieure 14 et supérieure 16 est assurée par une goupille 30. Le verrouillage de la goupille 30 en position de blocage peut être assuré par un système de verrouillage par vis 31.

A propos du guidage du câble 1, comme le montre les figures 2 et 4, il est avantageux de disposer des arceaux latéraux de guidage 18 et 19 placés de part et d'autre du volume défini par la structure 10 de la nacelle 2 sur laquelle évoluent les opérateurs. En effet, lors de l'approche de la nacelle 2, il importe que d'éventuels mouvements de balancier de la nacelle 2 ne fassent pas encourir aux opérateurs des risques de blessures par une approche trop violente du câble 1 par rapport au volume de la nacelle 2. Sur la figure 2, les arceaux latéraux 18 sont bombés pour éviter que le câble 1 ne s'approche trop de la structure métallique et notamment du touret 20. En regard de la figure 4, on constate que les autres arceaux 19 ont une forme destinée à protéger le haut du corps des opérateurs évoluant sur le plancher 35 de la nacelle. On voit mieux sur la figure 2, la base inférieure de ces arceaux latéraux 19 fixés à une rambarde 28 placée à la verticale du bord du plancher 35. Il est également utile de prévoir un petit écran de protection 33 placé au-dessus de la gorge 17 de la poulie supérieure 16 pour que le câble ne vienne pas se loger de manière intempestive dans cette gorge 17, lors de l'approche de la nacelle.

Concernant le touret 20, il est avantageux que celui-ci soit actionné par des moyens moteurs lors du rembobinage du tronçon usagé. Il est également préférable qu'il soit équipé de moyens de freinage lors du déroulement du nouveau tronçon. En conséquence, comme le montre la figure 2, on prévoit un emplacement 42 à l'intérieur duquel peut être placé un moteur à explosion pour fournir l'énergie nécessaire à faire tourner le touret 20. A cet effet, un moteur hydraulique peut être utilisé pour mettre en rotation le touret 20 à une vitesse très réduite. Les moyens de freinage peuvent être constitués par un frein à ruban agissant sur un diamètre du touret 20 et commandés manuellement. Pour la manoeuvre de ces moyens moteurs et de ces moyens de freinage, on peut disposer de moyens de commande, repérés 44, placés de façon ergonomique par rapport au plancher 35 sur lequel évoluent les opérateurs. Sur les figures 2 et 4, on peut distinguer une première cage de guidage 24 placée dans un plan horizontal qui est à peu près tangente à la partie supérieure du touret 20. Dans ces conditions, le tronçon neuf embobiné autour du touret 20 peut être dévidé facilement tout en étant guidé par cette première cage de guidage 24. Celle-ci est de préférence constituée de deux paires de rouleaux parallèles, décalés angulairement de 90°.

De façon identique, on dispose également d'une deuxième cage de guidage 22, placée à peu près dans le mime plan horizontal et destinée à servir de guidage au câble usagé lors de son rembobinage. Comme le montre la figure 2, cette deuxième cage 22 se trouve exactement en face du touret 20, par rapport à la trajectoire optimale que doit emprunter un câble devant être enroulé autour de ce touret 20. En effet, compte tenu des tensions lors de ce rembobinage, il importe de faire subir au câble usagé à enrouler une trajectoire la plus rectiligne possible.

Lors des opérations à effectuer aux extrémités des deux tronçons de câbles, la nacelle 2 doit être immobile. Dans ce but, on prévoit des moyens de blocage de cette nacelle 2 par rapport au câble 1. Comme le montre la figure 2, ce genre de blocage peut être réalisé à l'aide d'une paire de mâchoires 4B emprisonnant temporairement le câble 1. Dans ce type de réalisation, la paire de mâchoires 4B est positionnée au-dessus du touret 20, entre les deux couples de poulies inférieure 14 et supérieure 16. La fermeture des mâchoires 4B s'agrippant sur le câble 1, immobilise donc en translation horizontale la cellule 2.

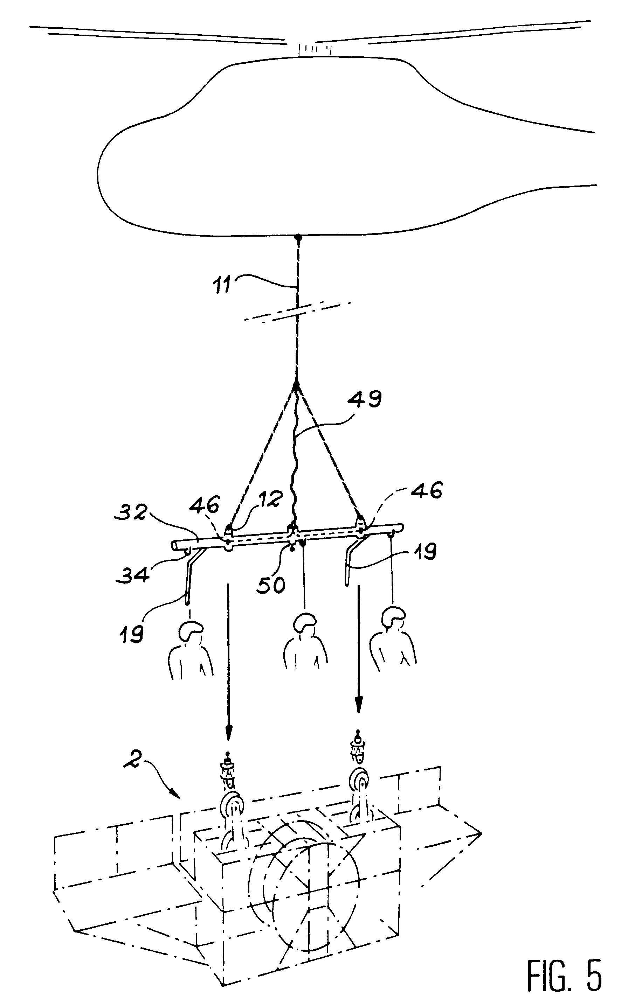

Comme illustré par la figure 5, les normes de sécurité imposées pour ce type de travaux sur les câbles aériens, au moyen d'une nacelle héliportée, imposent que cette nacelle 2 soit largable à tout moment en cas de panne de l'hélicoptère sustentateur. A cet effet, on prévoit une barre supérieure 32 à laquelle sont fixés les moyens d'ancrage 12. A cette barre supérieure 32 est suspendue la structure métallique 10 de la nacelle 2. On prévoit des moyens de largage pyrotechniques symbolisés par les références 46 ; ceux-ci peuvent être initiés pyrotechniquement par les opérateurs en cas d'accident au moyen d'un bouton de commande. Un cordeau de commande 49 peut même permettre un déclenchement de cette séparation à partir de l'hélicoptère. L'éclatement des moyens pyrotechniques provoque la rupture de la structure 10 par rapport à la barre supérieure 32 et la chute de l'ensemble du matériel. Les moyens pyrotechniques peuvent être constitués de boulons explosifs.

Dans l'éventualité d'un tel incident, des crochets de sécurité 34 sont prévus sur la barre supérieure 32, dans le but d'arrimer chaque opérateur à l'un de ces crochets 34 de manière à être assuré en cas de chute de la structure métallique 10. Dans ce cas, chaque opérateur se trouverait suspendu à la barre supérieure 32.

Pour préserver un bon positionnement de la structure 10 par rapport au câble, il est très avantageux de disposer en dessous de la barre supérieure 32 et en haut de la structure métallique 10 des joints de cardan 38 pour assurer à la structure 10 des mouvements indépendants par rapport à ceux de la barre supérieure 38.

La réalisation de la figure 2 montre également des passerelles latérales 36 déployées de chaque côté de la structure métallique 10, dans le prolongement du plancher 35. On comprend facilement que ces passerelles latérales 36 prolongent le champ d'opération de l'équipe d'opérateurs se trouvant à bord de la nacelle 2.

On peut ajouter dans les avantages qu'apporte l'invention, que, en cas de réparation d'un câble électrique, la ligne électrique peut rester sous tension pendant le remplacement de l'ancien tronçon par le nouveau.

Un autre avantage consiste à éviter la coupe de nombreux arbres se trouvant en dessous du câble à remplacer, lorsque celui-ci se situe au-dessus de forets ou de bois. Il en va de même vis-à-vis de la faune et de la flore qui peuvent être préservées.

L'invention permet la réparation de n'importe quelle ligne sur n'importe quel relief d'accès difficile.

On rappelle qu'une opération pouvant durer plusieurs journées sans nacelle héliportée peut se résumer à une opération nécessitant à peine une heure d'hélicoptère.

L'invention s'applique également à l'entretien et la réparation des câbles de téléphériques monocabines et des différents systèmes de transport utilisés sur les pentes correspondantes aux pistes de ski alpin (télésièges, téléskis, télécabines, ... ).

## Revendications

1. Nacelle héliportée (2) déplaçable le long d'un câble aérien (1) et guidée par ce câble aérien (1), destinée au remplacement d'un ancien tronçon (3) de ce câble (1) par un nouveau tronçon (4), constituée principalement d'une structure métallique (10) délimitant un volume de travail, sur laquelle sont embarqués :
- des moyens d'ancrage (12) de la nacelle (2) à un filin de sustentation (11) à un hélicoptère ;
- un touret (20) autour duquel peut être enroulé le nouveau tronçon (4) pour être déroulé par la suite et autour duquel peut être enroulé ultérieurement l'ancien tronçon (3) à remplacer ; et
- des moyens de guidage de la nacelle (2) par le câble (1) constitués de deux couples de deux poulies qui sont :
. une poulie supérieure (16) dont la gorge (17) est légèrement ouverte pour faciliter le dégagement du câble (1) lorsque ce câble (1) remonte contre celle-ci à la fin des opérations effectuées au moyen de la nacelle (2) ; et
. une poulie inférieure (14), destinée à recevoir le câble (1), lorsque la nacelle (2) est opérationnelle, c'est-à-dire lorsqu'elle est tractée vers le haut par l'hélicoptère.

2. Nacelle (2) selon la revendication 1, caractérisée en ce que chaque couple de poulies comporte un flasque (25) amovible, pour enfermer le câble (1) entre les deux poulies (14, 16) montées sur le même support (26), la fermeture étant assurée par une goupille (30) verrouillable dans ledit support (26).

3. Nacelle (2) selon l'une quelconque des revendications 1 ou 2, caractérisée en ce que des barres de guidage (29) sont prévues en regard de chaque couple de poulies (14, 16) inclinées pour guider le câble (1) dans l'espace entre les deux poulies (14, 16), lors de la mise en place de la nacelle (2).

4. Nacelle (2) selon l'une quelconque des revendications précédentes, caractérisée en ce qu'elle comprend des moyens moteurs en rotation et des moyens de freinage du touret (20).

5. Nacelle (2) selon la revendication 4, caractérisée en ce que les moyens moteurs sont constitués d'un moteur hydraulique actionné par un moteur à explosion et que les moyens de freinage sont constitués d'un frein manuel à ruban.

6. Nacelle (2) selon l'une quelconque des revendications précédentes, caractérisée en ce qu'elle comprend une paire de mâchoires (44) placée sur la trajectoire théorique du câble (1) pour immobiliser en translation horizontale la nacelle (2) sur le câble (1).

7. Nacelle (2) selon l'une quelconque des revendications précédentes, caractérisée en ce qu'elle comprend des arceaux latéraux de guidage (18, 19) du câble (1) autour de la nacelle (2), pour éviter que celui-ci ne vienne dans le volume délimité par la nacelle (2).

8. Nacelle (2) selon l'une quelconque des revendications précédentes, caractérisée en ce qu'elle comprend une première cage de guidage (24) destinée au nouveau tronçon (4) à installer et positionnée vers la partie supérieure du touret (20).

9. Nacelle (2) selon l'une quelconque des revendications précédentes, caractérisée en ce qu'elle comprend une deuxième cage de guidage (22), placée à côté de la partie supérieure du touret (20), de manière à définir une trajectoire tangentielle et rectiligne par rapport au touret (20) pour le tronçon à remplacer (3) qui doit être enroulé autour du touret (20).

10. Nacelle (2) selon l'une quelconque des revendications précédentes, caractérisée en ce qu'elle comprend une poutre supérieure (32) à laquelle est suspendue la structure (10) de la nacelle (2) ;
- des moyens pyrotechniques de largage (46) placés en dessous de la poutre supérieure (32) pour larguer la structure (10) de la nacelle (2) en cas d'accident ; et
- des crochets (34) pour l'arrimage individuel du personnel et sa sustentation temporaire à la poutre supérieure (32) en cas de largage de la structure (10).

11. Nacelle (2) selon la revendication 10, caractérisée en ce que la barre supérieure (32) est reliée à la structure (10) par des joints de cardan (38).

12. Nacelle (2) selon l'une quelconque des revendications précédentes, caractérisée en ce que la structure (10) comprend un plancher (35), des passerelles latérales (36) escamotables étant prévues pour prolonger le plancher (35) de la structure (10).

13. Nacelle selon l'une quelconque des revendications précédentes, caractérisée en ce qu'elle comprend des moyens de commande de la rotation du touret (20).

14. Procédé de remplacement d'un tronçon ancien (3) d'un câble aérien (1) par un nouveau tronçon (4) consistant à :
- placer contre le câble (1) une nacelle héliportée (2) selon l'une quelconque des revendications précédentes, comprenant l'outillage nécessaire à l'opération ;
- arrimer la nacelle (2) au câble (1) ;
- fixer la première extrémité libre (6) du nouveau tronçon enroulé (4) au câble aérien (1) en amont de la première extrémité (5) du tronçon ancien (3) ;
- déplacer au moyen de l'hélicoptère la nacelle (2) le long du câble (1) et dérouler le nouveau tronçon (4) ;
- fixer un vérin de reprise d'effort (40) à la deuxième extrémité (8) du nouveau tronçon (4) et au câble (1) en aval de la deuxième extrémité (7) de l'ancien tronçon (3) ;
- tendre le nouveau tronçon (4) au moyen du vérin de reprise d'effort (40) et fixer la deuxième extrémité (8) du nouveau tronçon (4) au câble (1) et ainsi détendre l'ancien tronçon (3) ;
- détacher du câble aérien la deuxième extrémité de l'ancien tronçon (3) du câble (1) et l'attacher au touret (20) ;
- déplacer la nacelle (2), en sens inverse, le long du câble (1), pour enrouler l'ancien tronçon (3) ;
- détacher la première extrémité (5) de l'ancien tronçon (3) du câble (1).

## Patentansprüche

1. Hubschraubergetragener Arbeitskorb (2), der entlang einem Freileitungskabel (1) verlagerbar ist und von dem Freileitungskabel (1) geführt wird, bestimmt zum Austausch eines Leitungsabschnitts (3) dieses Kabels (1) durch einen neuen Abschnitt (4), hauptsächlich bestehend aus einer einen Arbeitsraum umgrenzenden Metallkonstruktion (10), an der angeordnet sind:
- Verankerungsmittel (12) zum Verankern des Arbeitskorbs (2) an einem an einem Hubschrauber befindlichen Halteseil (11);
- eine Kabeltrommel (20), auf der der neue Abschnitt (4) aufwickelbar ist, um anschließend abgewickelt zu werden, und auf der später der alte, auszutauschende Abschnitt (3) aufgewickelt werden kann; und
- Führungsmittel zum Führen des Arbeitskorbs (2) durch das Kabel (1), gebildet durch zwei Paare aus zwei Seilrollen, nämlich:
eine obere Seilrolle (16), deren Seilrille (17) zur Erleichterung des Loskommens des Kabels etwas geöffnet ist, wenn dieses Kabel (1) am Schluß der mit Hilfe des Arbeitskorbs (2) vorgenommenen Tätigkeiten auf sie aufläuft; und
eine untere Seilrolle (14), die zur Aufnahme des Kabels (1) bestimmt ist, wenn der Arbeitskorb (2) in Betrieb ist, d.h. wenn er von dem Hubschrauber nach oben gezogen wird.

2. Arbeitskorb (2) nach Anspruch 1, **dadurch gekennzeichnet**, daß jedes Paar von Seilrollen einen bewegbaren Flansch (25) trägt, um das Kabel (1) zwischen den zwei auf dem gleichen Träger (26) gelagerten Seilrollen (14, 16) einzuschließen, wobei der Verschluß gesichert wird durch einen Stift (30), der in dem Träger (26) verschraubbar ist.

3. Arbeitskorb (2) nach Anspruch 1 oder 2, **dadurch gekennzeichnet**, daß für jedes Paar von Seilrollen (14, 16) Führungsstangen (29) vorgesehen sind, die geneigt sind, um das Kabel (1) in den Raum zwischen den beiden Seilrollen (14, 16) einzuführen, wenn der Arbeitskorb (2) plaziert wird.

4. Arbeitskorb (2) nach einem der vorhergehenden Ansprüche, **dadurch gekennzeichnet**, daß er Drehantriebsmittel und Bremsmittel für die Kabeltrommel (20) aufweist.

5. Arbeitskorb (2) nach Anspruch 4, **dadurch gekennzeichnet**, daß die Antriebsmittel gebildet werden durch einen Hydraulikmotor, der von einem Verbrennungsmotor betrieben wird, und die Bremsmittel durch eine Hand-Bandbremse gebildet werden.

6. Arbeitskorb (2) nach einem der vorhergehenden Ansprüche, **dadurch gekennzeichnet**, daß er ein Paar Klemmbacken (44) aufweist, die an der theoretischen Durchlauflinie des Kabels (1) angeordnet sind, um den Arbeitskorb (2) gegen eine horizontale Verlagerung an dem Kabel (1) festzusetzen.

7. Arbeitskorb (2) nach einem der vorhergehenden Ansprüche, **dadurch gekennzeichnet**, daß er gebogene Seitenführungen (18, 19) für das Kabel (1) um den Arbeitskorb (2) herum aufweist, um zu vermeiden, daß das Kabel in den von dem Arbeitskorb (2) begrenzten Raum hinein gelangt.

8. Arbeitskorb (2) nach einem der vorhergehenden Ansprüche, **dadurch gekennzeichnet**, daß er einen ersten Führungskäfig (24) für den neuen zu installierenden Abschnitt (4) aufweist, der dem oberen Teil der Kabeltrommel (20) zugewandt ist.

9. Arbeitskorb (2) nach einem der vorhergehenden Ansprüche, **dadurch gekennzeichnet**, daß er einen zweiten Führungskäfig (22) aufweist, der neben dem oberen Teil der Kabeltrommel (20) derart angeordnet ist, daß für den auf der Kabeltrommel (20) aufzuwickelnden, zu ersetzenden Abschnitt (3) eine tangentiale und geradlinige Bahn definiert wird.

10. Arbeitskorb (2) nach einem der vorhergehenden Ansprüche, **dadurch gekennzeichnet**, daß er einen oberen Tragbalken (32) besitzt, an dem die Konstruktion (10) des Arbeitskorbs (2) aufgehängt ist;
daß pyrotechnische Notauslösemittel (46) über dem oberen Tragbalken (32) angeordnet sind, um die Konstruktion (10) des Arbeitskorbs (2) bei einem Unfall abzulösen; und
daß Haken (34) zur individuellen Befestigung von Personen und deren vorübergehendem Halten an dem oberen Tragbalken (32) im Fall des Ablösens der Konstruktion (10) vorgesehen sind.

11. Arbeitskorb (2) nach Anspruch 10, **dadurch gekennzeichnet**, daß der obere Balken (32) mit der Konstruktion (10) über Kardangelenke (38) verbunden ist.

12. Arbeitskorb (2) nach einem der vorhergehenden Ansprüche, **dadurch gekennzeichnet**, daß die Konstruktion (10) einen Boden (35) aufweist, wobei seitliche, ausklappbare Brücken (36) vorgesehen sind, um den Boden (35) der Konstruktion (10) zu verlängern.

13. Arbeitskorb nach einem der vorhergehenden Ansprüche, **dadurch gekennzeichnet**, daß Steuermittel zum Drehen der Kabeltrommel (20) vorgesehen sind.

14. Verfahren zum Austauschen eines alten Abschnitts eines Freileitungskabels (1) durch einen neuen Abschnitt (4), **gekennzeichnet durch**
- gegen das Kabel (1) wird ein von einem Hubschrauber getragener Arbeitskorb (2) nach einem der vorhergehenden Ansprüche, der die für den Arbeitsgang notwendige Ausrüstung aufweist, plaziert;
- der Arbeitskorb (2) wird an dem Kabel (1) festgemacht;
- das erste freie Ende (6) des neuen aufgewickelten Abschnitts (4) des Freileitungskabels wird vor dem ersten Ende (5) des alten Abschnitts (3) befestigt;
- mit Hilfe des Hubschraubers wird der Arbeitskorb (2) entlang dem Kabel (1) verlagert, und der neue Abschnitt (4) wird abgewickelt;
- ein Kraftaufnahmeschloß (40) wird an dem zweiten Ende (8) des neuen Abschnitts (4) und an dem Kabel (1) hinter dem zweiten Ende (7) des alten Abschnitts (3) befestigt;
- ein neuer Abschnitt (4) wird mit Hilfe des Kraftaufnahmeschlosses (40) gespannt, und das zweite Ende (8) des neuen Abschnitts (4) wird an dem Kabel (1) befestigt, wobei der alte Abschnitt (3) entlastet wird;
- von dem Freileitungskabel wird das zweite Ende des alten Abschnitts (3) des Kabels (1) gelöst und an der Kabeltrommel (20) befestigt;
- der Arbeitskorb (2) wird entlang dem Kabel (1) in umgekehrter Richtung verlagert, um den alten Abschnitt (3) aufzuwickeln;
- das erste Ende (5) des alten Abschnitts (3) wird von dem Kabel (1) gelöst.

## Claims

1. Helicopter-carried nacelle (2) movable along an overhead cable (1) and guided by the latter, intended for the replacement of an old section (3) of said cable (1) by a new section (4) and mainly constituted by a metal structure (10) defining a working volume, which carries anchoring means (12) for fixing the nacelle (2) to a helicopter support rope (11), a drum (20) around which can be wound the new section (4) and is then unwound and around which can be wound subsequently the old section (3) to be replaced and means for guiding the nacelle (2) by the cable (1) constituted by two pairs of two pulleys formed by an upper pulley (16), whose groove (17) is slightly open to facilitate the release of the cable (1) when the latter rises against it at the end of the operations carried out by means of the nacelle (2) and a lower pulley (14) for receiving the cable (1), when the nacelle (2) is operational, i.e. when it is pulled up by the helicopter.

2. Nacelle (2) according to claim 1, characterized in that each pair of pulleys has a detachable end cover (25) for enclosing the cable (1) between the two pulleys (14, 16) mounted on the same support (26), closure being ensured by a pin (30) lockable in said support (26).

3. Nacelle (2) according to one of the claims 1 or 2, characterized in that guide bars (29) are located facing each pair of pulleys (14, 16) inclined in order to guide the cable (1) in the space between the two pulleys (14, 16) during the putting into place of the nacelle (2).

4. Nacelle (2) according to any one of the preceding claims, characterized in that it has motor rotation means and braking means for the drum (20).

5. Nacelle (2) according to claim 4, characterized in that the motor means are constituted by a hydraulic motor operated by an explosion motor and the braking means are constituted by a manual tape brake.

6. Nacelle (2) according to any one of the preceding claims, characterized in that it comprises a pair of jaws (44) placed on the theoretical trajectory of the cable (1) to immobilize the nacelle (2) in horizontal translation on said cable (1).

7. Nacelle (2) according to any one of the preceding claims, characterized in that it comprises lateral guidance arches (18, 19) for the cable (1) about the nacelle (2) in order to avoid the latter entering the volume defined by the nacelle (2).

8. Nacelle (2) according to any one of the preceding claims, characterized in that it comprises a first guidance cage (24) intended for the new section (4) to be installed and positioned towards the upper part of the drum (20).

9. Nacelle according to any one of the preceding claims, characterized in that it comprises a second guidance cage (22), placed alongside the upper part of the drum (20), so as to define a tangential, rectilinear trajectory with respect to the drum (20) for the section (3) to be replaced and which has to be wound around the drum (20).

10. Nacelle (2) according to any one of the preceding claims, characterized in that it comprises an upper beam (32) on which is suspended the structure (10) of the nacelle (2), pyrotechnic jettisoning means (46) below the upper beam (32) for jettisoning the structure (10) of the nacelle (2) in the case of an accident and hooks (34) for the individual securing of personnel and temporary supporting of the upper beam (32) in the case of the jettisoning of the structure (10).

11. Nacelle (2) according to claim 10, characterized in that the upper bar (32) is connected to the structure (10) by ball and socket joints (38).

12. Nacelle (2) according to any one of the preceding claims, characterized in that the structure (10) comprises a floor (35), retractable lateral catwalks (36) being provided for extending the floor (35) of the structure (10).

13. Nacelle according to any one of the preceding claims, characterized in that it comprises means for controlling the rotation of the drum (20).

14. Process for the replacement of an old section (3) of an overhead cable (1) by a new section (4) consisting of placing against the cable (1) a helicopter-carried nacelle (2), according to any one of the preceding claims, comprising the tools necessary for the operation, the securing of the nacelle (2) on the cable (1), fixing the first free end (6) of the new wound section (4) to the overhead cable (1) upstream of the first end (5) of the old section (3), moving the nacelle (2) along the cable (1) and unwinding the new section (4), fixing a force take-up jack (40) to the second end (8) of the new section (4) and to the cable (1) downstream of the second end (7) of the old section (3), tensioning the new section (4) by means of the force take-up jack (40) and fixing the second end (8) of the new section (4) to the cable (1) and thereby detensioning the old section (3), detaching from the overhead cable the second end of the old section (3) and attaching it to the drum (20), moving the nacelle (2) in the reverse direction along the cable (1) for winding up the old section (3) and detaching from the cable (1) the first end (5) of the old section (3).
